# EUROPÄISCHE PATENTSCHRIFT

(11) **EP 3 652 114 B1**
(45) Veröffentlichungstag und Bekanntmachung des Hinweises auf die Patenterteilung: **25.08.2021**
(21) Anmeldenummer: 18739843.3
(22) Anmeldetag: 11.07.2018
(51) Int. Cl.: C02F 1/34, B01F 7/00

(54) **VERFAHREN UND VORRICHTUNG ZUR BEHANDLUNG VON SCHADSTOFFEN IM WASSER DURCH KAVITATION**
METHOD AND DEVICE FOR THE TREATMENT OF CONTAMINANTS IN WATER BY CAVITATION
PROCÉDÉ ET DISPOSITIF DE TRAITEMENT DE POLLUANTS DANS L'EAU PAR CAVITATION

(30) Priorität: 12.07.2017 AT 505822017
(43) Veröffentlichungstag der Anmeldung: 20.05.2020
(73) Patentinhaber: Aflenzer, Robert, 2093 Geras (AT)
(72) Erfinder: ZEINER, Christian, 3500 Krems (AT); AFLENZER, Robert, 2093 Geras (AT)
(74) Vertreter: Puchberger & Partner Patentanwälte
(86) Internationale Anmeldenummer: PCT/EP2018/068742
(87) Internationale Veröffentlichungsnummer: WO 2019/011963

(56) Entgegenhaltungen:
- WO-A1-2015/024654
- UA-U- 26 547
- US-A1- 2003 192 831
- US-A1- 2009 098 266
- PETKOVSEK MARTIN ET AL: "Rotation generator of hydrodynamic cavitation for water treatment", SEPARATION AND PURIFICATION TECHNOLOGY, Bd. 118, 31. Juli 2013 (2013-07-31), Seiten 415-423, XP028739024, ISSN: 1383-5866, DOI: 10.1016/J.SEPPUR.2013.07.029

## Beschreibung

Die Erfindung betrifft eine Vorrichtung zur Behandlung von Schadstoffen im Wasser und ein Verfahren zur Wasserreinigung unter Verwendung der Vorrichtung.

Aspekte des Umweltschutzes gewinnen global betrachtet zunehmend für die Bevölkerung an Bedeutung. Ein sehr wesentlicher Aspekt davon ist die Schadstoffvernichtung im Trinkwasser sowie die Reinigung von Abwässern aus Haushalten, Gewerbe, Landwirtschaft und Industrie.

Trinkwasser und solche Abwässer können mit diversen Schadstoffen belastet sein. Aus daraus abzuleitenden Gründen gibt es eine Reihe verschiedener Behandlungsmethoden, welche sich grundsätzlich in mechanische, physikalische, biologische und chemische Methoden strukturieren lassen. Eine Methode bedient sich des Phänomens der Kavitation. Vorschläge für die Behandlung von Wasser in Verbindung mit Kavitation gibt es bereits, aber im großtechnischen Einsatz befinden sich dazu geeignete Vorrichtungen bisher nicht, da unter den Aspekten der Zuverlässigkeit, der Wirkungsgrade bzw. der Effizienz noch keine Erkenntnisse vorliegen. Vorrichtungen zur Wasserbehandlung durch Kavitation sind aus US2003/192831, UA26547U, US2009/098266 und WO2015/024654 bekannt.

Es ist eine Aufgabe der Erfindung, ein Verfahren und eine Vorrichtung zur Reinigung von Flüssigkeiten anzugeben, das bzw. die zuverlässig, effizient und dauerhaft mit hohem Wirkungsgrad arbeitet.

Die Aufgabe der Erfindung wird durch die Merkmale der Patentansprüche gelöst.

Die Erfindung betrifft eine Vorrichtung zur Behandlung von schadstoffbelastetem Wasser, wobei die Vorrichtung eine obere Scheibenstruktur und eine untere Scheibenstruktur umfasst, wobei die obere Scheibenstruktur und die untere Scheibenstruktur relativ zueinander rotierbar sind, wobei die obere Scheibenstruktur und die untere Scheibenstruktur Formflächen aufweisen, die eine ineinander greifende Oberflächenstruktur aufweisen, die derart ausgebildet ist, dass zwischen erster Scheibe und zweiter Scheibe ein durchgängiger Flüssigkeitskanal gebildet ist, sodass der Flüssigkeitskanal einen Wassereintritt und einen Wasseraustritt miteinander verbindet, und wobei der Abstand zwischen einander zugewandten Formflächen der Scheibenstrukturen, insbesondere die Höhe des Flüssigkeitskanals, entlang der radialen Erstreckung der Scheiben variiert.

Es ist vorgesehen, dass die Formflächen der Scheibenstrukturen Nuten und Rippen aufweisen, wobei die Rippen der oberen Scheibenstruktur in Nuten der unteren Scheibenstruktur eingreifen und wobei die Rippen der unteren Scheibenstruktur in Nuten der oberen Scheibenstruktur eingreifen.

Gegebenenfalls kann vorgesehen sein, dass der Abstand zwischen der oberen Scheibenstruktur und der unteren Scheibenstruktur veränderbar ist.

Gegebenenfalls kann vorgesehen sein, dass die obere Scheibenstruktur innerhalb eines Gehäusedeckels drehbar gelagert ist.

Gegebenenfalls kann vorgesehen sein, dass die obere Scheibenstruktur über eine Antriebswelle drehbar ist.

Gegebenenfalls kann vorgesehen sein, dass die untere Scheibenstruktur statisch, insbesondere als Stator-Scheibenstruktur, ausgebildet ist.

Ferner ist vorgesehen, dass der Flüssigkeitskanal Expansionszonen und Kompressionszonen umfasst, wobei die Expansionszonen und die Kompressionszonen im Bereich der Scheitelpunkte gegenüberliegender Nuten und Rippen der Scheibenstrukturen gebildet sind und wobei der Normalabstand der Scheitelpunkte von gegenüberliegenden Nuten und Rippen in den Expansionszonen größer ist als in den Kompressionszonen. Gegebenenfalls kann vorgesehen sein, dass Expansionszonen und Kompressionszonen abwechselnd angeordnet sind.

Gegebenenfalls kann vorgesehen sein, dass wenigstens vier Expansionszonen und wenigstens vier Kompressionszonen vorgesehen sind.

Gegebenenfalls kann vorgesehen sein, dass benachbarte Expansionszonen und Kompressionszonen durch keilförmige Verbindungszonen verbunden sind, wobei die Verbindungszonen durch im Querschnitt lineare Bereiche der Formflächen gebildet werden.

Erfindungsgemäß ist vorgesehen, dass die Nuten und die Rippen in ihrem Querschnitt einen kreissegmentförmigen Scheitelbereich aufweisen.

Gegebenenfalls kann vorgesehen sein, dass der Radius der kreissegmentförmigen Scheitelbereiche von Nuten und Rippen in radialer Richtung abnimmt.

Gegebenenfalls kann vorgesehen sein, dass die Formflächen der Scheibenstrukturen konzentrisch ausgebildet sind.

Es ist vorgesehen, dass die Nuten und Rippen kreisförmig ausgebildet sind. Gemäß einer nicht anspruchsgemäßen Ausführungsform kann vorgesehen sein, dass die Nuten und Rippen eine ovale oder elliptische Form aufweisen, soweit es die Breite der Nut zulässt.

Gegebenenfalls kann vorgesehen sein, dass der Normalabstand zwischen einander zugewandten Formflächen der Scheibenstrukturen in den Expansionszonen 5 mm bis 20 mm beträgt, und dass der Abstand zwischen einander zugewandten Oberflächen der Scheiben in den Kompressionszonen 1 mm bis 5 mm beträgt.

Gegebenenfalls kann vorgesehen sein, dass die Scheibenstrukturen aus Metall, insbesondere aus einem Nichteisenmetall, gebildet sind, mit Metall, insbesondere einem Nichteisenmetall, beschichtet sind, oder Metall, insbesondere ein

Nichteisenmetall, umfassen.

Gegebenenfalls kann vorgesehen sein, dass die Scheibenstrukturen aus Kunststoff gebildet sind, mit Kunststoff beschichtet sind, oder Kunststoff umfassen.

Gegebenenfalls kann vorgesehen sein, dass die Scheibenstrukturen, insbesondere die Formflächen elektrisch leitend ausgeführt sind.

Gegebenenfalls kann vorgesehen sein, dass die Scheibenstrukturen dazu ausgebildet sind, gegeneinander mit einer Umdrehungszahl von wenigstens 3000 Umdrehungen pro Minute zu rotieren. Gegebenenfalls kann vorgesehen sein, dass im Bereich des Wassereintritts eine Unterdruckzone vorgesehen ist. Gegebenenfalls kann vorgesehen sein, dass vor dem Wassereintritt oder im Bereich des Wassereintritts eine

Partikelabscheidungsvorrichtung angeordnet ist.

Gegebenenfalls kann vorgesehen sein, dass die obere Scheibenstruktur und die untere Scheibenstruktur als Rotor ausgebildet sind, oder dass die obere Scheibenstruktur als Rotor ausgebildet ist und die untere Scheibenstruktur als Stator ausgebildet ist.

Gegebenenfalls kann vorgesehen sein, dass im Bereich des Wassereintritts eine Drosselvorrichtung zur Drosselung des Flüssigkeitsdurchflusses angeordnet ist.

Gegebenenfalls kann vorgesehen sein, dass die obere Scheibenstruktur und/oder die untere Scheibenstruktur einen Durchmesser von 20 mm bis 1000 mm aufweisen.

Gegebenenfalls kann vorgesehen sein, dass die Vorrichtung dazu eingerichtet ist, einen Durchfluss zwischen 5 1/min und 1000 l/h einzustellen.

Gegebenenfalls kann vorgesehen sein, dass mehrere erfindungsgemäße Vorrichtungen flüssigkeitsleitend seriell miteinander verbunden sind.

Die Erfindung betrifft weiterhin die Verwendung einer erfindungsgemäßen Vorrichtung zur Behandlung von schadstoffbelastetem Wasser.

Die Erfindung betrifft ferner ein Verfahren, das folgende Schritte umfasst:
a. Vorreinigen des Wassers, insbesondere chemisches, physikalisches und/oder biologisches Vorreinigen des Wassers,
b. Abtrennen von Schwebstoffen und Partikeln, und
c. Einleiten des Wassers in die erfindungsgemäße Vorrichtung.

Gegebenenfalls kann vorgesehen sein, dass das Wasser insbesondere seriell durch mehrere erfindungsgemäße Vorrichtungen geleitet wird.

Weitere Merkmale der Erfindung ergeben sich aus den Patentansprüchen, sowie aus den Ausführungsbeispielen.

Im Folgenden wird die vorliegende Erfindung anhand von in den Figuren veranschaulichten Ausführungsbeispielen näher erläutert. Es zeigen:
Fig. 1: eine schematische Schnittansicht eines exemplarischen Ausführungsbeispiels der vorliegenden Erfindung;
Fig. 2a und 2b: schematische Ansichten der oberen Scheibenstruktur (Fig. 2a) und der unteren Scheibenstruktur (Fig. 2b) in der Draufsicht;
Fig. 3: eine perspektivische Explosionsansicht eines weiteren Ausführungsbeispiels einer erfindungsgemäßen Vorrichtung.

Wenn nicht anders angegeben, zeigen die Figuren folgende Elemente: obere Scheibenstruktur 1, untere Scheibenstruktur 2, Gehäusedeckel 3, Formfläche 4, Gehäuse 5. Antriebswelle 6, obere Trägerstruktur 7, Gehäuseschale 8, Halbschale 9, Wassereintritt 10, Eintrittsstutzen 11, Wasseraustritt 12, Nut 13, Rippe 14, Flüssigkeitskanal 15, Flussrichtung 16, Expansionszone 17, Kompressionszone 18, Mittelpunkt 19, Verbindungszone 20, Dichtungsstück 21, Wasserführungssteg 22.

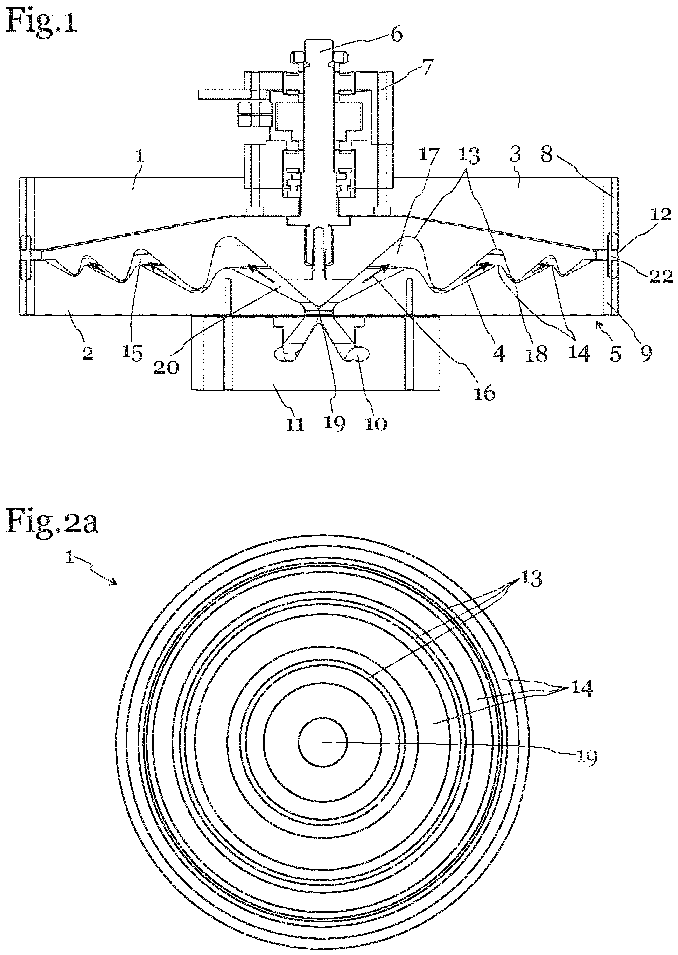

Fig. 1 zeigt eine schematische Schnittansicht eines exemplarischen Ausführungsbeispiels der vorliegenden Erfindung. Die Vorrichtung zur Behandlung von Wasser umfasst eine obere Scheibenstruktur 1 und eine untere Scheibenstruktur 2, welche gegeneinander drehbar ausgebildet sind. Die obere Scheiben Struktur 1 und die untere Scheibenstruktur 2 sind kreisförmig ausgebildet. In diesem Ausführungsbeispiel ist die untere Scheibenstruktur 2 statisch angeordnet, während die obere Scheibenstruktur 1 drehbar angeordnet ist. Dazu ist die obere Scheibenstruktur 1 mit einer Antriebswelle 6 verbunden, welche in einer oberen Trägerstruktur 7 drehbar gelagert ist. Zum Antrieb der oberen Scheibenstruktur 1 ist die Antriebswelle 6 mit einem Elektromotor verbunden, welcher in der Fig. 1 zur Vereinfachung der Darstellung nicht gezeigt ist.

Die drehbare obere Scheibenstruktur 1 wird von einem Gehäusedeckel 3 bedeckt. Das den Gehäusedeckel 3 und die untere Scheibenstruktur 2 umfassende Gehäuse 5 der erfindungsgemäßen Vorrichtung wird nach außen seitlich von einer den Gehäusedeckel 3 und die untere Scheibenstruktur 2 kreisförmig umgebenden Gehäuseschale 8 begrenzt. Die Gehäuseschale 8 wird aus zwei Halbschalen 9 gebildet.

Die Vorrichtung umfasst einen Wassereintritt 10, welcher an einem an der unteren Scheibenstruktur 2 angeordneten Eintrittsstutzen 11 angeordnet ist. Ferner umfasst die Vorrichtung einen Wasseraustritt 12, welcher an der Gehäuseschale 8 angeordnet ist.

Die obere Scheibenstruktur 1 und die untere Scheibenstruktur 2 umfassen einander zugewandte Formflächen 13, welche jeweils ineinander greifende Nuten 13 und Rippen 14 aufweisen. Die Nuten 13 und Rippen 14 sind als konzentrisch kreisförmige Strukturen ausgebildet, wodurch der Abstand zwischen den Formflächen 13 der oberen Scheibenstruktur 1 und der unteren Scheibenstruktur 2 in jeder Drehstellung konstant ist.

Zwischen der oberen Scheibenstruktur 1 und der unteren Scheibenstruktur 2 wird ein durchgängiger Kanal, insbesondere ein Flüssigkeitskanal 15, gebildet, welcher den Durchtritt von Wasser vom Wassereintritt 10 in Richtung des Wasseraustritts 12, also entlang der Flussrichtung 16 ermöglicht.

Der Flüssigkeitskanal 15 umfasst Expansionszonen 17 und Kompressionszonen 18, wobei der Abstand der Formflächen 4 der oberen Scheibenstruktur 1 und der unteren Scheibenstruktur 2 in den Expansionszonen 17 größer ist als in den Kompressionszonen 18. Expansionszonen 17 und Kompressionszonen 18 sind abwechselnd angeordnet. Wobei in diesem Ausführungsbeispiel vier Expansionszonen 17 und vier Kompressionszonen 18 vorgesehen sind. Gegebenenfalls kann eine andere Anzahl an Expansionszonen 17 und Kompressionszonen 18 vorgesehen sein, wobei jedoch um die Wirkung der erfindungsgemäßen Vorrichtung bestmöglich zu entfalten bevorzugt wenigstens je vier Expansionszonen 17 und vier Kompressionszonen vorgesehen sind.

Die Expansionszonen 17 und die Kompressionszonen 18 sind jeweils an den Scheitelpunkten der Nuten 13 bzw. Rippen 14 angeordnet, wobei der Normalabstand zwischen den Scheitelpunkten der jeweils ineinandergreifenden Nuten 13 und Rippen 14 die Größe der Expansionszone 17 oder der Kompressionszone definiert. Bevorzugt ist vorgesehen, dass die Größe der Expansionszonen 17 und der Kompressionszonen 18 mit zunehmendem Abstand vom Mittelpunkt 19 von der oberen Scheibenanordnung 1 abnimmt. In diesem Ausführungsbeispiel ist also beispielsweise eine Expansionszone 17, die näher am Mittelpunkt 19 liegt größer, also deren Normalabstand zwischen dem Scheitelpunkt der Nut 13 und der gegenüberliegenden Rippe 14 ist größer, als eine Expansionszone 17, die weiter vom Mittelpunkt 19 entfernt liegt. Ebenso ist eine Kompressionszone 18, die näher am Mittelpunkt 19 liegt größer, also deren Normalabstand zwischen dem Scheitelpunkt der Nut 13 und der gegenüberliegenden Rippe 14 ist größer, als eine Kompressionszone 18, die weiter vom Mittelpunkt 19 entfernt liegt.

Die Bereiche des Flüssigkeitskanals 15 zwischen Expansionszonen 17 und Kompressionszonen 18 werden durch Verbindungszonen 20 gebildet. Die Formflächen 4 der oberen Scheibenstruktur 1 und der unteren Scheibenstruktur 2 weisen im Bereich der Verbindungszonen 20 lineare Bereiche auf. Durch die erfindungsgemäße Ausgestaltung der linearen Bereiche sind die Verbindungszonen 20 keilförmig ausgebildet, also sind die linearen Bereiche der Formflächen 4 der Schiebenstrukturen 1, 2 in einem Winkel zueinander angeordnet, der mehr als 0° beträgt. Bevorzugt kann der Winkel, den gegenüberliegende lineare Bereiche der Formflächen 4 einschließen zwischen 1° und 20° betragen.

Die Verbindungszonen 20 erweitern sich von einer Kompressionszone 18 in Richtung einer Expansionszone 17 und die Verbindungszonen 20 verjüngen sich von einer Expansionszone 17 in Richtung einer Kompressionszone 18. Dadurch wird durch den Wassereintritt 10 einströmende Flüssigkeit aus den Expansionszonen 17 in die Kompressionszonen 18 gepresst, wodurch die Flüssigkeit in den Kompressionszonen 18 einem besonders hohen Druck und einer besonders hohen Fließgeschwindigkeit ausgesetzt ist. In Verbindung mit der relativen Rotation der Scheibenstrukturen 1, 2 gegeneinander wird eine turbulente Strömung erzeugt, die Kavitation, Implosionen und Sonolumineszenz hervorrufen kann.

Dadurch werden die in der Flüssigkeit vorhandenen Strukturen, insbesondere organische Strukturen, wie etwa Bakterien, Viren, Biomoleküle oder kleinere organische Moleküle einer hohen Beanspruchung ausgesetzt, was zu deren Abbau oder Zerstörung führen kann. Insbesondere kann die Wirkung der Sonolumineszenz, also im Wesentlichen elektrischer Mikroentladungen, zu einer Zerstörung der oben beispielhaft genannten Stoffe führen.

Im bestimmungsgemäßen Betrieb der erfindungsgemäßen Vorrichtung strömt Wasser vom Wassereintritt 10 in den zwischen den Scheibenstrukturen 1, 2 gebildeten Flüssigkeitskanal 15. Der Flüssigkeitsstrom wird durch eine Sogwirkung erzeugt, welche wie nachstehend beschrieben hervorgerufen wird. Dadurch wirkt die erfindungsgemäße Vorrichtung selbstansaugend und es ist nicht notwendig eine zusätzliche Pumpe zur Flüssigkeitszufuhr einzusetzen.

Flüssigkeit, die von der Zentrifugalwirkung der sich drehenden oberen Scheibenstruktur 1 unterstützt, in den Flüssigkeitskanal 15 strömt, tritt in dem hier gezeigten Ausführungsbeispiel zuerst in die sich in Richtung der ersten Expansionszone 17 keilförmig öffnende Verbindungszone 20. Die Expansionszone 17 ist im Bereich der Scheitelpunkte einander gegenüberliegender Nuten 13 und Rippen der Scheibenstrukturen 1, 2 angeordnet. Von der Zentrifugalwirkung weiter nach außen gefördert tritt die Flüssigkeit in die sich in Richtung der ersten Kompressionszone 18 verjüngenden Verbindungszone, wodurch die Flüssigkeit einem erhöhten Druck ausgesetzt wird und die Fließgeschwindigkeit erhöht wird. In der Kompressionszone 18, die sich im Bereich der Scheitelpunkte einander gegenüberliegender Nuten 13 und Rippen der Scheibenstrukturen 1, 2 befindet, kann es zu turbulenten Strömungsverhältnissen kommen, wodurch Kavitation, Implosionen und Sonolumineszenz hervorgerufen werden kann. Die oben beschriebene Kombination aus abwechselnder Verdichtung und Entspannung der Flüssigkeit erfolgt in diesem Ausführungsbeispiel drei weitere Male, bevor die Flüssigkeit in den Wasserführungssteg 22 eintritt, der in der Gehäuseschale 8 angeordnet ist.

Dadurch kann die Flüssigkeit zu einem einzigen Wasseraustritt 12 geleitet werden, von welchem die Flüssigkeit aus der erfindungsgemäßen Vorrichtung ausströmen kann. Die Flüssigkeit kann direkt in ein Entwässerungssystem geleitet werden, es können jedoch auch Rohre oder andere Leitungen an den Wasseraustritt 12 angeschlossen sein und dem Abtransport der behandelten Flüssigkeit dienen.

In diesem Ausführungsbeispiel weisen die Scheibenstrukturen 1, 2 einen Durchmesser von etwa 300 mm auf, wodurch sich ein Durchfluss von etwa 1000 l/h einstellt.

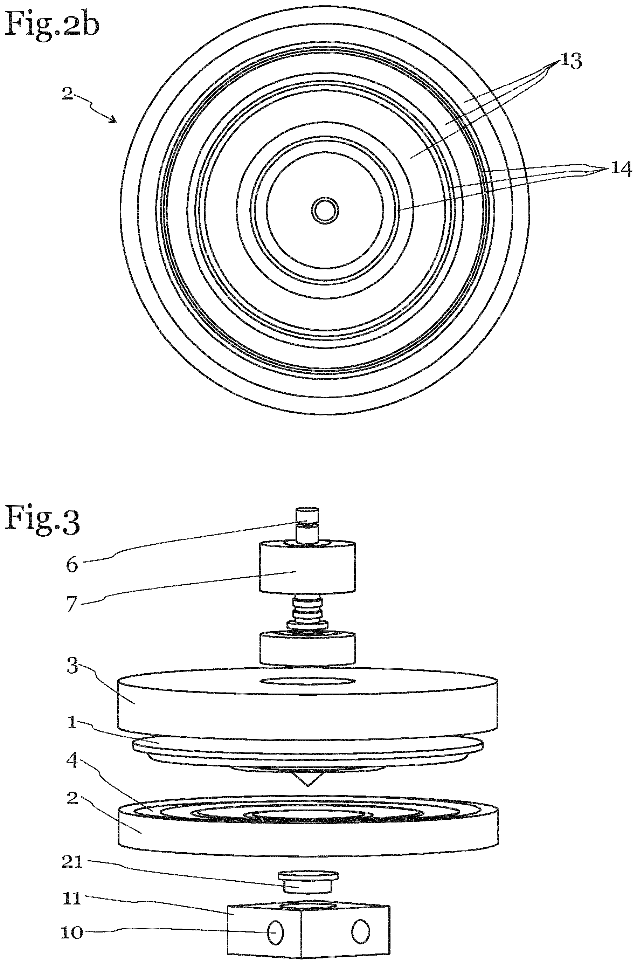

Fig. 2a und 2b zeigen schematische Ansichten der oberen Scheibenstruktur 1 (Fig. 2a) und der unteren Scheibenstruktur 2 (Fig. 2b) in der Draufsicht. Zu erkennen sind die konzentrisch kreisförmig angeordneten Nuten 13 und Rippen 14, welche derart positioniert sind, dass die Struktur der Formflächen 4 bei zusammengesetzten Scheibenstrukturen 1, 2 ineinander eingreifen kann.

Fig. 3 zeigt eine perspektivische Explosionsansicht eines weiteren Ausführungsbeispiels einer erfindungsgemäßen Vorrichtung. Gezeigt sind die obere Scheibenstruktur 1 und die untere Scheibenstruktur 2 mit ihren ineinandergreifenden Formflächen. Die obere Scheibenstruktur 1 ist über die Antriebswelle 6 drehbar angeordnet, welche ihrerseits in der oberen Trägerstruktur 7 gelagert ist. Die obere Scheibenstruktur 1 wird vom Gehäusedeckel 3 nach oben hin abgedeckt. Die untere Scheibenstruktur 2 ist statisch angeordnet und mit dem Eintrittsstutzen 11 verbunden, der einen Wassereintritt 10 zu Zuführung von Flüssigkeit aufweist. Zwischen Eintrittsstutzen 11 und unterer Scheibenstruktur 2 ist ein Dichtungsstück 21 angeordnet. Die aus Halbschalen 9 gebildete Gehäuseschale 8 ist in der Fig. 3 zur besseren Sichtbarkeit der restlichen Komponenten der erfindungsgemäßen Vorrichtung nicht dargestellt. Die Scheibenstrukturen 1, 2 in diesem Ausführungsbeispiel weisen einen Durchmesser von etwa 300 mm auf, wobei sich bei einer Umdrehungszahl von etwa 4000 U/min ein Fluss von etwa 1000 l/h einstellt. Bei diesem Ausführungsbeispiel hat der Elektromotor, der zum Antrieb der oberen Scheibenanordnung 1 verwendet wird eine Leistungsaufnahme von etwa 22 W.

Zusätzlich wird auf Folgendes hingewiesen:
Die Aufgabe der Erfindung wird erfindungsmäßig durch eine Vorrichtung bzw. ein Verfahren mit den Merkmalen der Patentansprüche gelöst. Bei der Behandlung von Inhaltsstoffen, insbesondere Schadstoffen, im Wasser durch Implosion tritt das zu behandelnde Wasser zwischen zwei einander gegenüberliegenden, um parallele, zueinander axial gerichteten drehenden oberen und stehende/drehende unteren Scheiben, die auf den gegenüberstehenden Formflächen bzw. Oberflächen eine Konturierung aufweisen, die die Bildung von Implosionen und Sonolumineszenz bewirkt, hindurch.

Beide Scheiben haben jeweils für sich Formflächen, welche ringförmige, aber nicht unbedingt kreisförmige Rippen und Nuten aufweisen, die im Wesentlichen konzentrisch zur Drehachse der jeweiligen Scheibe angeordnet sind. Die Kämme der Rippen sowie die Gründe der Nuten verlaufen dabei nicht normal zur Drehachse, somit nicht parallel zu einer entsprechend bestimmten Stirnfläche, daher ändern sich die für das strömende Wasser freibleibende Querschnitte über die Winkellage. Da die Scheiben analog, aber nicht notwendigerweise gleich in ihrer Konturierung ausgebildet sind, wobei nur Rippen/Nuten der beiden Scheiben ineinandergreifen, ändern sich die Durchström-Querschnitte auch über die Strömungszeit. Beim Einströmen der Flüssigkeit im Zentrum und Ausströmen entlang des Umfanges (Peripherie) passiert jedes Volumsteilchen diese sich beim relativen verdrehen der Scheiben zueinander ständig in ihrer Form und ihrem Querschnitt ändernde Struktur des Flüssigkeitskanals und wird dabei Druckdifferenzen unterworfen, die bis zur Verdampfung unter Bildung von Dampfblasen und somit zur Implosion führen, wobei die Dampfblasen schlagartig in sich zusammenfallen. Diese Implosionszone kann sich bei entsprechender Regelung der Drehzahl, sowie Frequenz und passender Formgebung der Zug- / Druckgradienten derart ausbilden, dass es zum kontinuierlichen Auftreten von Sonolumineszenz (dieses wird durch; Felipe Gaitan 1990, Thomas Erber 1975, Robert A. Hiller 1991, beschrieben) kommt. Eine derartige Vorrichtung wird nachfolgend auch als Implosionsvorrichtung bezeichnet.

Eine Implosion welche auch kontinuierliches Auftreten von Sonolumineszenz hervorruft, kann zur Zerstörung von schädlichen organischen Substanzen, wie auch zur Zerstörung von Schadstoffen im Trink- und Abwasser eingesetzt werden. Die entstehenden Druck- und Zugspitzen, verbunden mit dem Erreichen des Aufreißens des Wassers (H.W. Strube, W. Lauterborn), sowie den entstehenden Temperaturspitzen, können nachhaltig viele bekannte Strukturen von Schadstoffen zerstören.

Durch diese sich ergebenden Effekte und die im UV-Bereich liegenden elektromagnetischen Entladungsblitze kann jedwedes organisch strukturiertes mit Schadstoffen belastetes Material zerstört und somit beseitigt werden.

Das kontaminierte Wasser strömt teils in Rotationsrichtung, teils in radialer Richtung an den Zug- und Druckgradienten erzeugenden Oberflächen oder Formflächen entlang, welche die Effekte der Implosion und kontinuierlichen Auftreten der Sonolumineszenz hervorrufen, die axiale Querschnittshöhe kann durch axiale Verstellung zumindest einer der Scheiben relativ betrachtet verändert werden.

Weiterhin ist die vorliegende Erfindung darauf gerichtet, eine zur Durchführung eines solchen Verfahrens geeignete Vorrichtung zur Verfügung zu stellen. Die vorliegende Erfindung ist weiterhin darauf gerichtet, ein Verfahren der Behandlung von Schadstoffen im Wasser durch Implosion in einer derartigen Vorrichtung bereitzustellen, welches sich bis hin zum großtechnischen Einsatz eignet, insbesondere indem in Anwendung des Verfahrens eine effiziente Behandlung von schadstoffbelastetem Wasser mittels Implosionen und kontinuierliches Auftreten von Sonolumineszenz möglich ist. Gelöst wird die vorstehend angegebene Aufgabenstellung durch ein Verfahren mittels Behandlung von Schadstoffen belastetem Wasser durch Implosion in einer Vorrichtung, bei welchem das zu behandelnde Wasser durch eine zwischen zwei einander gegenüberliegenden, zueinander axial gerichteten drehenden / stehenden Scheibenstrukturen, mit im Wesentlichen gegeneinander gerichteten Implosion und Sonolumineszenz erzeugenden Formflächen hindurchtritt. Die obere / untere Scheibe weist jeweils auf ihrer Stirnseite ausgeformte Formflächen aus, wobei dies in der Gesamtheit (Scheibe mit Formflächen an den Stirnflächen), als Scheibenstruktur bezeichnet wird.

Die vorliegende Erfindung ist so ausgeführt, dass die Vorgänge der Erzeugung von Implosionen, sowie von Implosionen in Effektverbindung mit kontinuierlichem Auftreten von Sonolumineszenz steuer- und regelbar sind.

### Beschreibung und Vorteile

In Anwendung der Erfindung lassen sich mit einer demgemäß gestalteten Vorrichtung entsprechend veränderbare Mengen an mit Schadstoffen belastetem Wasser effektiv und effizient einer Behandlung durch Implosion und kontinuierliches Auftreten von Sonolumineszenz, im Zusammenwirken, unterziehen, wobei die entsprechende Implosionsvorrichtung vergleichsweise kompakt ausgeführt sein kann.

Als besonderer Aspekt der Effektivität und Effizienz ist dabei hervorzuheben, dass die Implosionsvorrichtung nicht nur das bekannte Schadstoffspektrum abdeckt, sondern auch mit einer geringen Leistungsaufnahme auskommt, sondern dass sie darüber hinaus auch eine hohe Lebensdauer aufweist. Die Arbeits- und Bauweise der Implosionsvorrichtung reduziert wesentlich das Risiko einer Beschädigung von den durchströmten rotierenden Formflächen durch den Druck- und Zuggradienten. Als ein insoweit entscheidender Aspekt ist anzusehen, dass gemäß der vorliegenden Erfindung zur Erzeugung von Implosion und kontinuierliches Auftreten von Sonolumineszenz durch die Erzeugung von örtlich begrenzten Unterdruck mit hohen Druck- und Zuggradienten, sowie den Temperaturspitzen gezielt auf den Formflächen abgestellt wird, welche jeweils an den Stirnflächen der rotierenden / stehenden Scheiben vorgesehen sind, durch die das schadstoffbelastete Wasser in Rotationsrichtung bewegt wird. In Kompressionszonen, die einen geringeren Fließquerschnitt aufweisen als die Expansionszonen, können durch turbulente Strömungen Implosionen hervorgerufen werden. Daher werden die Kompressionszonen auch als Implosionszonen bezeichnet. Durch die ausgeformten Formflächen können vorzugsweise mindestens vier Implosionszonen ausgebildet werden, in jeder dieser selektierten Implosionszone treten die Effekte von Druck- und Zuggradienten, effektive Temperatursteigerung, Sonolumineszenz in der erzeugten Implosion, sowie das Wälzen des Wassers in axialer- und radialer Richtung auf. Durch diese Aspekte, werden diese Einwirkungen vom Eintritt des Wassers bis hin zum Austritt, je nach Bauart sowie Einsatzspektrum, bevorzugt mindestens viermal wiederholt und somit die Effizienz, Wirkungsgrad, Effektivität gesteigert.

Bei einer solchen Gestaltung stellen sich die angestrebten Wirkungen (Implosion) in einem solchen Maß ein, dass eine effiziente Schadstoffbehandlung des Wassers möglich ist, ohne dass zugleich eine unzulässig große Gefahr der Beschädigung der Implosionsvorrichtung durch die entstehende Druck- und Zugpulsation entsteht. Dies ist, wie dargelegt, eine vorteilhafte Bemessung für typische Anwendungsfälle.

Typische Anwendungsfelder sind im Abwasserbereich der Einsatz als vierte Stufe, die eine gezielte Behandlung von Bakterien und Viren, sowohl an einem Trägermaterial anhaftend, als auch in einer kristallinen Struktur eingebettet, sicher gewährleistet. Des Weiteren können dadurch auch Schadstoffstämme in diesem Medium, also in Abwasser, gezielt und nachhaltig behandelt werden. Somit ergibt sich je nach Anwendungsspektrum, nicht nur eine Behandlung gegen Schadstoffe mit organischen Strukturen, sondern auch gegenüber Schadstoffen mit kristallinen Aufbau und kristallinen Schale. Diese Schalen werden aufgebrochen und somit werden die organischen Schadstoffe im Kern nachhaltig zerstört. Auch eine Änderung der Spannung im Wasser kann dadurch erzielt werden. Die Spannung verändert kann sich in den negativen Bereich verändern, womit eine Ionisierung des Wassers abgeleitet werden kann.

Je nach Art der Schadstoffe, in der vorliegenden Substanz, welche mittels Implosionseffekten zerstört bzw. unschädlich, abgebaut werden soll, können unterschiedliche Strukturen der Formflächen verwendet werden. Zusätzlich kann durch eine geeignete Anpassung der Struktur der Formflächen die Gefahr von Resonanzeffekten verringert werden, welche die Formflächen über das normale Maß hinaus abnützen und somit die Lebensdauer der erfindungsgemäßen Vorrichtung drastisch reduzieren können.

Des Weiteren können durch die unterschiedliche Dimensionierung die Abläufe der Implosion so effektiv gestaltet werden, dass die Lebensdauer der Implosionsvorrichtung auf ein Maximum gesteigert werden kann.

Die erfindungsgemäße Vorrichtung kann ein Gehäuse mit einem Wassereintritt, einem Wasseraustritt und mehreren Zonen, die sich zwischen zwei zueinander angeordneten Formflächen abbilden, und zueinander axial ausgerichtet sein können.

Gegebenenfalls können die Abstände zwischen den Formflächen der Scheiben in der Höhe variabel verändert werden, dadurch werden auch die Formflächen in ihrer horizontalen Abbildung und Durchsatzmenge gestaltet. Die Effektivität wir dadurch nicht beeinträchtigt, nur die Durchsatzmenge des schadstoffbelasteten Wassers kann individuell gesteuert werden.

Gegebenenfalls kann vorgesehen sein, dass der Wassereintritt der erfindungsgemäßen Vorrichtung mit einer Struktureinheit versehen ist. Diese Struktureinheit kann die Ausbildung einer Unterdruckzone im Bereich des Wassereintritts verstärken. In diesem Falle wird die bevorzugte Weiterbildung zuströmseitig angeordnet, also zwischen Wassereintritt und der ersten Expansionszone in die Implosionsvorrichtung. Die Druckdifferenzwirkung im Wassereintrittsbereich, wird dadurch wesentlich verstärkt, dass die sich ergebende Rotationswirkung der Wassersäule in Drehrichtung unterstützt wird. Gegebenenfalls kann vorgesehen sein, dass der Wasseraustritt der erfindungsgemäßen Implosionsvorrichtung mit einer radialen Halbschalenkammer versehen ist, die in ihrer Formgebung und Wirkungsweise der Durchflussmenge angepasst werden kann. Gegebenenfalls kann vorgesehen sein, dass der axiale Abstand der beiden Scheibenstrukturen zueinander einstellbar ist. Eine hierdurch entstehende Flexibilität der Implosionsvorrichtung lässt eine unterschiedliche Anpassung an das jeweilige Aufgabenspektrum zu. Dadurch können die Druck- und Zuggradienten innerhalb der Implosionszonen, dem zu behandeltem Fluid angepasst werden.

Gegebenenfalls kann vorgesehen sein, dass sich die Formflächen in radialer Richtung in Anzahl und Ausführungsart entsprechend der Durchströmungsrichtung der Implosionszone verändern. Insbesondere kann dies den Abstand zu jeweils axial zueinander angeordneten Nuten und Rippen betreffen. In diesem Sinne vergrößern bzw. verkleinern sich die Kompressionszonen in radialer Richtung nach außen. Dies ist unter Aspekten von Effizienz - für typische Anwendungsfälle - als sehr günstig zu betrachten.

Gegebenenfalls kann vorgesehen sein, dass die Wasseraustrittsseite in radialer Richtung von äußeren Wasserführungsstegen eingefasst ist, die in Umfangsrichtung einen im Wesentlichen konstanten Abstand zu den Scheiben einhalten. Diese können jedoch ggf. in ihrer Formgebung bzw. strömungstechnischen Einwirkung dem Einsatzspektrum angepasst werden. Die Wasserführungsstege tragen zu einer gerichteten Strömung des Wassers und einem Antriebseffekt der Scheibenstruktur bei.

Gegebenenfalls kann vorgesehen sein, dass die Wassereintrittsseite als Partikelabtrennungseinrichtung zur Beseitigung von Schwebstoffen vor dem Wassereintritt in die Implosionsvorrichtung ausgebildet ist. Diese Ausführung kann mehrstufig ausgebaut sein. Die Schwebstoffe können dabei über seitliche Öffnungen in mehrstufiger Ausführung mittels anhand der Zentrifugalwirkung ausgefiltert werden.

Während sich die vorliegende Erfindung auch mit Implosionsvorrichtungen umsetzen lässt, bei denen sowohl die obere als auch die untere Scheibenstruktur in gleichläufiger oder gegenläufiger Weise rotieren, ist gemäß einer abermals anderen bevorzugten Weiterbildung eine der beiden Scheibenstrukturen Teil eines drehbar angetriebenen Rotors und die andere Scheibenstruktur Teil eines nicht drehbaren Stators. Dies gestattet eine großtechnische Umsetzung der vorliegenden Erfindung mit geringerem apparativem Aufwand als im Falle zweier sich drehender Scheiben. Nicht ausschlaggebend ist dabei, welche der beiden Scheibenstrukturen gedreht wird. Gegebenenfalls kann vorgesehen sein, dass die Rotor-Scheibenstruktur auf einer durch einen Motor angetriebenen Trägerstruktur angeordnet ist. In entsprechender Weise kann die Stator-Scheibenstruktur an einer Gehäusestruktur angeordnet sein. Dies begünstigt eine individuelle Anpassung der erfindungsgemäßen Vorrichtung an unterschiedliche Aufgaben und Anforderungen durch einfachen Austausch der Rotor-Scheibenstruktur und/oder der Stator-Scheibenstruktur. Die oben erwähnte Trägerstruktur kann dabei insbesondere als durchströmbarer zentraler Wasserleitkörper ausgeführt sein, der einen radialen Austrittsspalt aufweist, welcher im Wesentlichen mit dem zwischen den Scheibenstrukturen bestehenden Spalt fluchtet. Bei geeigneter Ausgestaltung kann in den zentralen Wasserleitkörper zugleich eine Einlassstufe implementiert sein, welche für eine effiziente Zuführung des zu behandelnden Wassers in die hierfür maßgeblichen formgebenden Implosionszonen zwischen den beiden Scheiben sorgt.

Die erfindungsgemäße Vorrichtung kann gegebenenfalls mehrstufig ausgeführt sein, indem zwei oder mehr Stufen kaskadenartig nacheinander durchströmt werden. In diesem Falle ist der Wasseraustritt der vorangehenden Stufe mit dem Wassereintritt der nachfolgenden Stufe verbunden.

Weiterhin kann die Vorrichtung gegebenenfalls eine Drosseleinrichtung aufweisen, mittels welcher sich die Durchströmung der Vorrichtung verändern bzw. gezielt einstellen lässt. Der Flüssigkeitsstrom in die Vorrichtung kann damit eingestellt und insbesondere an den Grad der Verschmutzung bzw. Schadstoffbelastung angepasst werden.

Gegebenenfalls kann die Erfindung ein Verfahren der Behandlung von schadstoffbelastendem Wasser durch Implosionen und kontinuierliches Auftreten von Sonolumineszenz in einer erfindungsgemäßen Vorrichtung betreffen, wobei das zu behandelnde Wasser durch eine zwischen zwei einander gegenüberstehenden, relativ zueinander drehenden Scheibenstrukturen mit im Wesentlichen axial gegeneinander gerichteten Formflächen, bestehenden ringförmig ausgeprägten sich im Querschnitt veränderten Implosionszonen hindurch tritt und dabei an Formflächen entlang strömt, welche stirnseitig an den beiden Scheibenstrukturen vorgesehen sind und in Umfangsrichtung dergestalt ausgebildet sind, dass sie in relativer Drehrichtung der anderen, zweiten Scheibenstruktur betrachtet ihren Abstand zu letzterer vergrößern bzw. verkleinern.

Gegebenenfalls kann vorgesehen sein, dass das Wasser unter Einwirkung einer der Vorrichtung zugeordneten Sogzone durch die Druckdifferenzzone in die Vorrichtung gefördert wird. Gegebenenfalls kann vorgesehen sein, dass das Wasser unter der Einwirkung einer rotierenden Scheibenstruktur an Kompressionszonen und Expansionszonen entlang bewegt wird.

Gegebenenfalls betrifft die Erfindung eine Vorrichtung, bei der ein Gehäuse mit zwei zueinander geschlossenen Halbschalen vorgesehen ist. Die Halbschalen können Wasserführungsstege aufweisen. Es kann ein unterdruckerzeugender durchflussregelbarer Wassereintritt vorgesehen sein. Es kann ein in der Halbschale eingebetteter Wasseraustritt vorgesehen sein. Die Scheibenstrukturen können im Wesentlichen axial gegeneinander gerichtete Formflächen aufweisen, welche zwischen dem Wassereintritt und dem Wasseraustritt angeordnet sind. Es können durchströmte ringförmige Implosionszonen gebildet sein, wobei stirnseitig an den beiden Scheibenstrukturen Formflächen vorgesehen sind, die in Umfangsrichtung dergestalt geformt sind, dass sie in relativer Drehrichtung der anderen, zweiten Scheibenstruktur betrachtet, ihren räumlich betrachtenden Abstand der sich ergebenden Implosionszonen vergrößern bzw. verkleinern.

Gegebenenfalls kann vorgesehen sein, dass der unterdruckerzeugende Wassereintritt mit radialen Halbschalen im Wassereinlass versehen ist, die in ihrer Formgebung und Wirkungsweise der Durchflussmenge angepasst werden kann. Gegebenenfalls kann vorgesehen sein, dass der Wasseraustritt in einer der radialen Halbschalen eingebettet ausgeführt ist. Gegebenenfalls kann vorgesehen sein, dass in dem unterdruckerzeugenden Wassereintritt eine Druckminderungsstufe angeordnet ist, durch welche das Wasser in die Implosionszonen gefördert wird.

Gegebenenfalls kann vorgesehen sein, dass der axiale Abstand der beiden Scheibenstrukturen zueinander variable einstellbar ist.

Erfindungsgemäß ist vorgesehen, dass zwischen den Formflächen der beiden Scheiben ausgeformte Zonen gebildet werden, die in Umfangsrichtung betrachtet Implosions- oder Kompressionszonen, Expansionszonen, oder Verbindungszonen bilden.

Gegebenenfalls kann vorgesehen sein, dass die Implosionszonen in radialer Richtung entsprechend der Durchströmungsrichtung der Formflächen ihren Abstand zur zweiten Scheibenstruktur eine veränderliche Größe aufweisen.

Erfindungsgemäß ist vorgesehen, dass die obere Scheibenstruktur und die untere Scheibenstruktur einen Flüssigkeitskanal bilden.

Gegebenenfalls kann vorgesehen sein, dass die Formflächen radial außen begrenzt, von äußeren Halbschalen mit Wasserführungsstegen eingefasst sind, die in Umfangsrichtung einen im Wesentlichen konstanten Abstand zur zweiten Scheibenstruktur einhalten.

Gegebenenfalls kann vorgesehen sein, dass die äußeren Halbschalen mit den Wasserführungsstegen Teil des Wasseraustritts sind.

Gegebenenfalls kann vorgesehen sein, dass eine der Scheibenstrukturen Teil eines drehend angetriebenen Rotors und die andere Scheibenstruktur Teil eines sich variablen drehenden Stators/Rotors ist.

Gegebenenfalls kann vorgesehen sein, dass die Rotor-Scheibenstruktur als Rotor-Ringscheibe ausgeführt ist, die auf einer Welle durch einen Motor drehend angetriebenen, in dem Hohlraum des Gehäuses angeordneten Rotor-Trägerstruktur eingebettet montiert ist.

Gegebenenfalls kann vorgesehen sein, dass die Rotor-Trägerstruktur als nicht durchströmter Teil ausgeführt ist. Gegebenenfalls kann vorgesehen sein, dass sich die geometrische Konturierung der Formflächen in Umfangsrichtung betrachtet entsprechend ändert. Diese Formflächen können je nach Anwendungsfällen mit einem Winkel, sowie mit einer variablen Längengestaltung, in tangentialer Richtung zum Zentrum in Umfangsrichtung betrachtet zwischen 25° und 68° Grad ansteigen, sowie zwischen 20° und 70°abfallend ausgeführt sein. Gegebenenfalls kann vorgesehen sein, dass die beiden Scheibenstrukturen eine unterschiedliche Anzahl an Formflächen aufweisen.

Gegebenenfalls kann vorgesehen sein, dass die radial angeordneten Halbschalen mit Wasserführungsstegen in starrer und/oder beweglicher Form ausgeführt sind.

Gegebenenfalls kann vorgesehen sein, dass der Wassereinlass in die Vorrichtung flexibel in der Querschnittsveränderung sowie in der unterschiedlichen Geometrieform ausgeführt ist. Gegebenenfalls kann vorgesehen sein, dass die obere bzw. die untere Scheibenstruktur aus Aluminium, allen bekannten Aluminium-Legierungen, technischen Kunststoff, Titan und allen Titan-Legierungen, Stahl und allen bekannten Stahl-Legierungen, allen technisch bekannten Beschichtungen die auf die angeführten Materialien aufgetragen werden können, ausgeführt ist.

## Patentansprüche

1. Vorrichtung zur Behandlung von schadstoffbelastetem Wasser, wobei,
- die Vorrichtung eine obere Scheibenstruktur (1) und eine untere Scheibenstruktur (2) umfasst,
- die obere Scheibenstruktur (1) und die untere Scheibenstruktur (2) relativ zueinander rotierbar sind,
- die obere Scheibenstruktur (1) und die untere Scheibenstruktur (2) Formflächen (4) aufweisen, die eine ineinander greifende Oberflächenstruktur aufweisen, die derart ausgebildet ist, dass zwischen erster Scheibe (1) und zweiter Scheibe (2) ein durchgängiger Flüssigkeitskanal (15) gebildet ist, sodass der Flüssigkeitskanal (15) einen Wassereintritt (4) und einen Wasseraustritt (5) miteinander verbindet,
- der Abstand zwischen einander zugewandten Formflächen (4) der Scheibenstrukturen (1, 2), insbesondere die Höhe des Flüssigkeitskanals (15), entlang der radialen Erstreckung der Scheiben (1, 2) variiert,
- die Formflächen (4) der Scheibenstrukturen (1, 2) Nuten (13) und Rippen (14) aufweisen, wobei die Rippen (14) der oberen Scheibenstruktur (1) in Nuten (13) der unteren Scheibenstruktur (2) eingreifen und wobei die Rippen (14) der unteren Scheibenstruktur (2) in Nuten (13) der oberen Scheibenstruktur (1) eingreifen,
- und die Nuten 13 und Rippen 14 als konzentrisch kreisförmige Strukturen ausgebildet sind,
**dadurch gekennzeichnet,**
- **dass** die Nuten (13) und die Rippen (14) in ihrem Querschnitt einen kreissegmentförmigen Scheitelbereich aufweisen,
- und **dass** der Flüssigkeitskanal (15) Expansionszonen (17) und Kompressionszonen (18) umfasst, wobei die Expansionszonen(17) und die Kompressionszonen (18) im Bereich der Scheitelpunkte gegenüberliegender Nuten (13) und Rippen (14) der Scheibenstrukturen (1, 2) gebildet sind und wobei der Normalabstand der Scheitelpunkte von gegenüberliegenden Nuten (13) und Rippen (14) in den Expansionszonen (17) größer ist als in den Kompressionszonen (18).

2. Vorrichtung nach Anspruch 1, **dadurch gekennzeichnet, dass** der Abstand zwischen der oberen Scheibenstruktur (1) und der unteren Scheibenstruktur (2) veränderbar ist, **und/oder dass** die obere Scheibenstruktur (1) innerhalb eines Gehäusedeckels (3) drehbar gelagert ist.

3. Vorrichtung nach Anspruch 2, **dadurch gekennzeichnet, dass** die obere Scheibenstruktur (1) über eine Antriebswelle (6) drehbar ist.

4. Vorrichtung nach einem der Ansprüche 1 bis 3, **dadurch gekennzeichnet, dass** die untere Scheibenstruktur (2) statisch, insbesondere als Stator-Scheibenstruktur, ausgebildet ist.

5. Vorrichtung nach einem der Ansprüche 1 bis 4, **dadurch gekennzeichnet, dass** Expansionszonen (17) und Kompressionszonen (18) abwechselnd angeordnet sind, **und/oder dass** wenigstens vier Expansionszonen (17) und wenigstens vier Kompressionszonen (18) vorgesehen sind.

6. Vorrichtung nach einem der Ansprüche 1 bis 5, **dadurch gekennzeichnet, dass** benachbarte Expansionszonen (17) und Kompressionszonen (18) durch keilförmige Verbindungszonen (20) verbunden sind, wobei die Verbindungszonen (20) durch im Querschnitt lineare Bereiche der Formflächen (4) gebildet werden, **und/oder dass** der Radius der kreissegmentförmigen Scheitelbereiche von Nuten (13) und Rippen (14) in radialer Richtung abnimmt.

7. Vorrichtung nach einem der Ansprüche 1 bis 6, **dadurch gekennzeichnet, dass** der Normalabstand zwischen einander zugewandten Formflächen (4) der Scheibenstrukturen (1, 2) in den Expansionszonen 5 mm bis 20 mm beträgt, und dass der Abstand zwischen einander zugewandten Oberflächen der Scheiben (1, 2) in den Kompressionszonen 1 mm bis 5 mm beträgt **und/oder dass** die Scheibenstrukturen (1, 2) aus Metall, insbesondere aus einem Nichteisenmetall, gebildet sind, mit Metall, insbesondere einem Nichteisenmetall, beschichtet sind, oder Metall, insbesondere ein Nichteisenmetall, umfassen.

8. Vorrichtung nach einem der Ansprüche 1 bis 7, **dadurch gekennzeichnet, dass** die Scheibenstrukturen aus Kunststoff gebildet sind, mit Kunststoff beschichtet sind, oder Kunststoff umfassen, **und/oder dass** die Scheibenstrukturen (1, 2), insbesondere die Formflächen (4) elektrisch leitend ausgeführt sind.

9. Vorrichtung nach einem der Ansprüche 1 bis 8, **dadurch gekennzeichnet, dass** die Scheibenstrukturen (1, 2) dazu eingerichtet sind, gegeneinander mit einer Umdrehungszahl von wenigstens 3000 Umdrehungen pro Minute zu rotieren **und/oder dass** im Bereich des Wassereintritts (10) eine Unterdruckzone vorgesehen ist.

10. Vorrichtung nach einem der Ansprüche 1 bis 9, **dadurch gekennzeichnet, dass** vor dem Wassereintritt (10) oder im Bereich des Wassereintritts (10) eine Partikelabscheidungsvorrichtung angeordnet ist, **und/oder dass** die obere Scheibenstruktur (1) und die untere Scheibenstruktur (2) als Rotor ausgebildet sind, oder dass die obere Scheibenstruktur (1) als Rotor ausgebildet ist und die untere Scheibenstruktur (2) als Stator ausgebildet ist.

11. Vorrichtung nach einem der Ansprüche 1 bis 10, **dadurch gekennzeichnet,**
- **dass** im Bereich des Wassereintritts (10) eine Drosselvorrichtung zur Drosselung des Flüssigkeitsdurchflusses angeordnet ist,
- **und/oder dass** die obere Scheibenstruktur (1) und/oder die untere Scheibenstruktur (2) einen Durchmesser von 20 mm bis 1000 mm aufweisen.

12. Vorrichtung nach einem der Ansprüche 1 bis 11, **dadurch gekennzeichnet, dass** die Vorrichtung dazu eingerichtet ist, einen Durchfluss zwischen 5 1/min und 1000 l/h einzustellen **und/oder dass** mehrere Vorrichtungen flüssigkeitsleitend seriell miteinander verbunden sind.

13. Verwendung einer Vorrichtung nach einem der Ansprüche 1 bis 12 zur Behandlung von schadstoffbelastetem Wasser.

14. Verfahren zur Behandlung von schadstoffbelastetem Wasser, **dadurch gekennzeichnet, dass** das Verfahren folgende Schritte umfasst:
a. Vorreinigen des Wassers, insbesondere chemisches, physikalisches und/oder biologisches Vorreinigen des Wassers,
b. Abtrennen von Schwebstoffen und Partikeln, und
c. Einleiten des Wassers in die Vorrichtung nach einem der Ansprüche 1 bis 12, insbesondere serielles Leiten durch mehrere Vorrichtungen nach einem der Ansprüche 1 bis 12.

## Claims

1. A device for the treatment of contaminated water, wherein
- the device comprises an upper disc structure (1) and a lower disc structure (2),
- the upper disc structure (1) and the lower disc structure (2) can be rotated relative to each other,
- the upper disc structure (1) and the lower disc structure (2) have mold surfaces (4) with an engaging surface structure which is realised such that a continuous liquid channel (15) is formed between the first disc (1) and the second disc (2) so that the liquid channel (15) connects a water inlet (4) with a water outlet (5),
- the distance between mold surfaces (4) facing one another of the disc structures (1, 2), in particular the height of the liquid channel (15), varies along the radial extension of the discs (1, 2),
- the mold surfaces (4) of the disc structures (1, 2) have grooves (13) and ridges (14), wherein the ridges (14) of the upper disc structure (1) engage in grooves (13) of the lower disc structure (2) and wherein the ridges (14) of the lower disc structure (2) engage in grooves (13) of the upper disc structure (1),
- and the grooves (13) and ridges (14) are designed as concentric circular structures, **characterized**
- **in that** the grooves (13) and ridges (14) have an apex region in the form of a circular segment in their cross section,
- and **in that** the liquid channel (15) comprises expansion zones (17) and compression zones (18), wherein the expansion zones (17) and the compression zones (18) are formed in the region of the vertices of opposing grooves (13) and ridges (14) of the disc structures (1, 2) and wherein the normal distance of the vertices of opposing grooves (13) and ridges (14) in the expansion zones (17) is greater than in the compression zones (18).

2. The device according to claim 1, **characterized in that** the distance between the upper disc structure (1) and the lower disc structure (2) is variable, **and/or in that** the upper disc structure (1) is rotatably mounted within the housing lid (3).

3. The device according to claim 2, **characterized in that** the upper disc structure (1) is rotatable via a drive shaft (6).

4. The device according to one of claims 1 to 3, **characterized in that** the lower disc structure (2) is statically designed, in particular as a stator disc structure.

5. The device according to one of claims 1 to 4, **characterized in that** the expansion zones (17) and the compression zones (18) are arranged alternately, **and/or in that** at least four expansion zones (17) and at least four compression zones (18) are provided.

6. The device according to one of claims 1 to 5, **characterized in that** adjacent expansion zones (17) and compression zones (18) are connected via wedge-shaped connecting zones (20), the connecting zones (20) being formed by cross-sectionally linear regions of the mold surfaces (4), **and/or in that** the radius of the apex regions in the form of a circular segment of grooves (13) and ridges (14) decreases in the radial direction.

7. The device according to one of claims 1 to 6, **characterized in that** the normal distance between mold surfaces (4) facing one another of the disc structures (1, 2) is from 5 mm to 20 mm in the expansion zones and **in that** the distance between surfaces facing one another of the discs (1, 2) is from 1 mm to 5 mm in the compression zones, **and/or in that** the disc structures (1, 2) are made of metal, in particular a non-ferrous metal, coated with metal, in particular a non-ferrous metal, or comprise metal, in particular a non-ferrous metal.

8. The device according to one of claims 1 to 7, **characterized in that** the disc structures are made of plastic, coated with plastic or comprise plastic, **and/or in that** the disc structures (1, 2), in particular the mold surfaces (4), are configured to be electrically conductive.

9. The device according to one of claims 1 to 8, **characterized in that** the disc structures (1, 2) are configured to rotate against one another at a speed of at least 3000 revolutions per minute, **and/or in that** a negative pressure zone is provided in the region of the water inlet (10).

10. The device according to one of claims 1 to 9, **characterized in that** a particle deposition apparatus is arranged upstream of the water inlet (10) or in the region of the water inlet (10), **and/or in that** the upper disc structure (1) and the lower disc structure (2) are designed as a rotor, or **in that** the upper disc structure (1) is designed as a rotor and the lower disc structure (2) is designed as a stator.

11. The device according to one of claims 1 to 10, **characterized**
- **in that** a throttle device is arranged in the region of the water inlet (10) for throttling the liquid flow,
- **and/or in that** the upper disc structure (1) and/or the lower disc structure (2) have a diameter of 20 mm to 1000 mm.

12. The device according to one of claims 1 to 11, **characterized in that** the device is configured to adjust a flow between 5 l/min and 1000 l/min, **and/or in that** a plurality of devices are serially connected to each other in a liquid-conducting manner.

13. A use of a device according to one of claims 1 to 12 for the treatment of contaminated water.

14. A method for the treatment of contaminated water, **characterized in that** the method comprises the following steps:
a) Precleaning the water, in particular chemically, physically and/or biologically precleaning the water,
b) Separating suspended matter and particles, and
c) Introducing the water into the device according to one of claims 1 to 12, in particular serially conducting it via multiple devices according to one of claims 1 to 12.

## Revendications

1. Un dispositif pour le traitement des eaux polluées, dans lequel
- le dispositif comprend une structure de disque supérieure (1) et une structure de disque inférieure (2),
- la structure de disque supérieure (1) et la structure de disque inférieure (2) peuvent être tournées l'une par rapport à l'autre,
- la structure de disque supérieure (1) et la structure de disque inférieure (2) présentent des surfaces de moulage (4) ayant une structure de surface emboîtable formée de sorte qu'un passage de liquide (15) continu est formé entre le premier disque (1) et le deuxième disque (2) de sorte que le passage de liquide (15) relie une entrée d'eau (4) et une sortie d'eau (5),
- la distance entre des surfaces de moulage (4) se faisant face des structures de disque (1, 2), en particulier la hauteur du passage de liquide (15), varie le long de l'étendue radiale des disques (1, 2),
- les surfaces de moulage (4) des structures de disque (1, 2) présentent des rainures (13) et des nervures (14), les nervures (14) de la structure de disque supérieure (1) étant engagées dans des rainures (13) de la structure de disque inférieure (2) et les nervures (14) de la structure de disque inférieure (2) étant engagées dans des rainures (13) de la structure de disque supérieure (1),
- et les rainures (13) et les nervures (14) sont réalisées sous forme de structures circulaires concentriques,
**caractérisé**
- **en ce que** les rainures (13) et les nervures (14) présentent une zone de sommet en forme de segment de cercle à section transversale,
- et **en ce que** le passage de liquide (15) comprend des zones d'expansion (17) et des zones de compression (18), dans lequel les zones d'expansion (17) et les zones de compression (18) sont formées dans la zone des sommets des rainures (13) et nervures (14) opposées des structures de disque (1, 2) et dans lequel la distance normale des sommets des rainures (13) et nervures (14) opposées est plus grande dans les zones d'expansion (17) que dans les zones de compression (18).

2. Le dispositif selon la revendication 1, **caractérisé en ce que** la distance entre la structure de disque supérieure (1) et la structure de disque inférieure (2) est variable, **et/ou en ce que** la structure de disque supérieure (1) est montée rotative dans un couvercle de boîtier (3).

3. Le dispositif selon la revendication 2, **caractérisé en ce que** la structure de disque supérieure (1) est rotative par l'intermédiaire d'un arbre d'entraînement (6).

4. Le dispositif selon l'une des revendications 1 à 3, **caractérisé en ce que** la structure de disque inférieure (2) est réalisée statiquement, en particulier comme une structure de disque de stator.

5. Le dispositif selon l'une des revendications 1 à 4, **caractérisé en ce que** les zones d'expansion (17) et les zones de compression (18) sont disposées en alternance, **et/ou en ce que** au moins quatre zones d'expansion (17) et au moins quatre zones de compression (18) sont prévues.

6. Le dispositif selon l'une des revendications 1 à 5, **caractérisé en ce que** des zones d'expansion (17) et des zones de compression (18) adjacentes sont reliées par des zones de jonction (20) en forme de coin, les zones de jonction (20) étant formées par des zones à section linéaire des surfaces de moulage (4), **et/ou en ce que** le rayon des zones de sommet en forme de segment de cercle des rainures (13) et des nervures (14) diminue dans la direction radiale.

7. Le dispositif selon l'une des revendications 1 à 6, **caractérisé en ce que** la distance normale entre des surfaces de moulage (4) se faisant face des structures de disque (1, 2) est de 5 mm à 20 mm dans les zones d'expansion, et **en ce que** la distance entre des surfaces (4) se faisant face des disques (1, 2) est de 1 mm à 5 mm dans les zones de compression, **et/ou en ce que** les structures de disque (1, 2) sont réalisées en métal, en particulier d'un métal non ferreux, revêtues de métal, en particulier d'un métal non ferreux, ou comprennent du métal, en particulier un métal non ferreux.

8. Le dispositif selon l'une des revendications 1 à 7, **caractérisé en ce que** les structures de disque sont réalisées en matière plastique, revêtues de matière plastique ou comprennent une matière plastique, **et/ou en ce que** les structures de disque (1, 2), en particulier les surfaces de moulage (4) sont réalisées de manière à être électriquement conductrices.

9. Le dispositif selon l'une des revendications 1 à 8, **caractérisé en ce que** les structures de disque (1, 2) sont configurées pour tourner l'une contre l'autre à une vitesse d'au moins 3000 tours par minute **et/ou en ce que** une zone de pression négative est prévue dans la région de l'entrée d'eau (10).

10. Le dispositif selon l'une des revendications 1 à 9, **caractérisé en ce que** un dispositif de séparation de particules est disposé avant l'entrée d'eau (10) ou dans la région de l'entrée d'eau (10), **et/ou en ce que** la structure de disque supérieure (1) et la structure de disque inférieure (2) sont réalisées comme rotor, ou **en ce que** la structure de disque supérieure (1) est réalisée comme rotor et la structure de disque inférieure (2) est réalisée comme stator.

11. Le dispositif selon l'une des revendications 1 à 10, **caractérisé**
- **en ce que** un dispositif d'étranglement est disposé dans la région de l'entrée d'eau (10) pour étrangler l'écoulement de liquide,
- **et/ou en ce que** la structure de disque supérieure (1) et/ou la structure de disque inférieure (2) présentent un diamètre de 20 mm à 1000 mm.

12. Le dispositif selon l'une des revendications 1 à 11, **caractérisé en ce que** le dispositif est configuré pour ajuster un écoulement entre 5 l/min et 1000 l/min, **et/ou en ce que** plusieurs dispositifs sont reliés entre eux en série de manière à permettre l'écoulement du liquide.

13. Une utilisation d'un dispositif selon l'une des revendications 1 à 12 pour le traitement des eaux polluées.

14. Une méthode pour le traitement des eaux polluées, **caractérisée en ce que** la méthode comprend des étapes suivantes :
a) Prénettoyage de l'eau, en particulier prénettoyage chimique, physique et/ou biologique de l'eau,
b) Séparation des matières en suspension et des particules, et
c) Introduction de l'eau dans le dispositif selon l'une des revendications 1 à 12, en particulier conduction en série à travers plusieurs dispositifs selon l'une des revendications 1 à 12.
